# EUROPEAN PATENT APPLICATION

(11) **EP 2 733 071 A2**
(43) Date of publication of application: **21.05.2014**
(21) Application number: 13185750.0
(22) Date of filing: 24.09.2013
(51) Int. Cl.: B64C 27/46

(54) **Rotor blade**

(30) Priority: 16.11.2012 GB 201220601
(71) Applicant: Rolls-Royce plc, London SW1E 6AT (GB)
(72) Inventor: Read, Simon John, Bristol, BS9 1PD (GB)
(74) Representative: Hawtree, John

(57) **Abstract**

A blade 30 at least part of which is arranged in use to rotate outside of a casing of a gas turbine engine 10. The blade 30 has a main body 32, a tip fence 36 and a blend region 40 defining a curve between the main body 32 and the fence 36. The blend region 40 has a radius of curvature below five inches and the fence 36 extends anhedrally from the blend region 40 with respect to the main body 32.

## Description

The present invention relates to a blade at least part of which is arranged in use to rotate outside of a casing of a gas turbine engine, a tidal turbine blade and an open rotor engine. The invention may have particular application to open rotor engine blades but is not limited to such applications and may for example be applied to turbo-propeller blades or tidal turbines.

It is known to provide the tips of open rotor blades with fences (that is altering the angular orientation of the tip region with respect to a main body of the blade). One function of a tip fence is to reduce vortex generation at the blade tips. Reduction of vortices is advantageous as creation of a vortex requires energy, thus reducing the efficiency of the blade. Reducing the vortex strength can also reduce noise emission arising from impingement of the vortices on downstream surfaces. A second function of a tip fence is to increase the thrust of the blade by reducing the quantity of air that travels radially outwards beyond the blade tip. The fence creates an aerodynamic force in the radial direction, forcing additional axial rather than radial flow, thus producing additional thrust.

One problem with high performance blades is that blade tip rotational speeds often exceed Mach 0.5. Consequent high centrifugal loads mean that considerable force is placed on the joint between the blade main body and the fence. One approach to reducing stress at the joint is to provide a blend region between the blade main body and fence. The blend region defines a curve between the blade and the fence, reducing stress.

A further problem is that the combination of high rotational speed and high onset flow Mach number results in flow relative to the blades which may exceed the speed of sound. The aerodynamic shocks produced at the blade tips can significantly reduce aerodynamic efficiency. The local Mach number at the blend between the main blade body and the fence will exceed nearby Mach numbers. If therefore shock waves are present, lost efficiency due to shock waves will increase with the addition of a blend region and fence. This effect increases as the blend region radius of curvature decreases. Therefore one approach to reducing the effect of lost efficiency due to shock waves at the blend region is to increase the radius of curvature of the bend.

While increasing the radius of curvature of the blend region alleviates material stresses and can reduce shock wave losses, it also decreases thrust for a blade of a given length and tip radius, as the blend region produces less thrust than the main blade body.

According to a first aspect of the invention there is provided a blade at least part of which is optionally arranged in use to rotate outside of a casing of a gas turbine engine, the blade having optionally a main body, optionally a tip fence and optionally a blend region defining a curve between the main body and the fence, the blend region optionally having a radius of curvature below five inches and the fence optionally extending from the blend region anhedrally with respect to the main body.

As will be appreciated an aerofoil operating in isolation develops lift because the pressure on one side is lower than the other. The low pressure side may be considered 'the suction surface', and the high pressure side 'the pressure surface.' The pressure on the suction surface is below ambient, whereas the pressure on the pressure surface is above ambient. This pressure field extends some distance away from the surface of the aerofoil decaying with increasing distance. When a tip fence is added, the pressure field within the concave angle created between the fence and the main body of the blade may be thought of as being the summation of the pressure fields created by the main body and the fence. As a result of this summation effect, the pressure field within the concave angle gets stronger as the blend radius of curvature decreases.

When the suction surface of the fence is arranged so as to make a concave angle with the suction surface of the main body (dihedral fence), the pressure in the concave angle is lower relative to ambient than it would be if the fence were not there. The lower pressure results in higher fluid flow velocity, increased likelihood of aerodynamic shocks caused by local airflow speeds exceeding Mach 1 and exacerbation of shocks already present, resulting in greater efficiency loss. In contrast, when the pressure surface of the fence is arranged so as to make a concave angle with the pressure surface of the main body (anhedral fence), the pressure in the concave angle is higher relative to ambient than if the fence were not there. The higher pressure results in lower fluid flow velocity. Unless the blend region radius of curvature is very small (typically less than one inch), the maximum velocity on the convex side of the blend region for both anhedral and dihedral fences is relatively unaffected by the introduction of the fence. Therefore the maximum Mach number on a blade with an anhedral fence can be reduced compared to the maximum Mach number on a blade with an equivalent dihedral fence. The maximum strength of any shocks present and the resulting lost aerodynamic efficiency can therefore be reduced.

Consequently by utilising an anhedral rather than dihedral fence, the blend region may be made tighter (having a smaller radius of curvature) than might be required for a dihedral fence having similar risk/strength of aerodynamic shocks.

The use of a tighter radius of curvature at the blend region (i.e. below five inches as permitted by the anhedral fence) may have the advantage of reducing the overall length of the blade required to produce a given thrust or absorb a given power. The potential consequent reductions in weight of the blade and the drag it produces may produce efficiency gains. Especially in the context of open rotor blades further efficiency gains may arise, e.g. a shorter engine pylon may be lighter, produce less drag and require reduced weight of fuselage structure to support the cantilevered load. Further, additional design choices may be available in selected engine position and configuration, e.g. the shorter blades may increase blade clearance relative to the ground or fuselage and/or fuselage boundary layer air-flow.

In some embodiments the radius of curvature of the blend region is greater than one inch. The reduction of the radius of curvature of the blending region may be advantageous as discussed above. Nonetheless, even with an anhedral fence, it may be advantageous to maintain a blend region (i.e. the angular change between the main body and fence is not achieved in a single sharp step, but rather in intermediate steps or via a continuous curved progression). As the radius of curvature decreases the pressure on the suction side of the blend region will decrease (increasing the local blade relative velocity and the strength of any aerodynamic shocks present) and the stress at the blend region will increase. It is believed that a radius of curvature below substantially one inch would result in these problems becoming unacceptably great.

In some embodiments the radius of curvature of the blend region is between one and four inches, or between one and three inches or between one and two inches.

In some embodiments the maximum circumferential extent of the fence is greater than the maximum radial extent of the fence. As will be appreciated the terms circumferential and radial are used in the context of a machine axis from which the blade main body extends radially and about which it rotates when in use. In general therefore the extent of the fence in a direction substantially perpendicular to the main body is greater than its extent in a direction that is a continuation of the main body. Therefore the main extent of the fence is in the anhedral direction.

In some embodiments the blade does not have a dihedral fence. As will be appreciated, blades having both anhedral and dihedral fences may not benefit from the advantages of the invention.

In some embodiments the length of the fence along a blade line is less than 10% of the total length of the blade along the blade line. The blade line passes along the main body, the blend region and the fence. It is defined as the line joining points along each mean chord line for each cross-section that forms the blade, the points being position at 40% along the mean chord line from a leading edge to a trailing edge of the blade. A relatively short fence with respect to the length of the blade may reduce the stresses placed on the blend region. This in turn may contribute to facilitation of the blend region having a relatively short radius of curvature, without excessive stress being placed on the blend region.

In some embodiments the main body is swept. This may allow improved aerodynamic efficiency of the blade especially for use in engines designed to give higher flight speeds (e.g. Mach 0.75). A blade leading edge sweep between 20-50° may be advantageous, and a blade leading edge sweep between 30-45° may be particularly advantageous.

In some embodiments the sweep of the main body continues into the blend region and at least a portion of the fence. This may further enhance aerodynamic performance for use in engines designed to give higher flight speeds. The sweeping of a blade (including in the blending region and fence) reduces shock loses. The combination of the anhedral fence and a swept blend region and fence helps to keep the Mach number down, therefore contributing to a low shock loss even with a small blend region radius of curvature.

In some embodiments the main body has an aerofoil cross-section. The lift produced by the aerofoil may increase the propulsive force.

In some embodiments the aerofoil cross-section continues into the blend region and at least a portion of the fence. The aerofoil cross section in the blend region and fence increases the efficiency with which the radial force is created (i.e. drag is reduced).

In some embodiments the cross-sectional shape of the blend region is substantially the same as the cross-sectional shape of the tip of the main body. This may enhance the benefit provided by the invention as additional blend region material (altering the cross-sectional shape) may alter the aerodynamic interaction between the main body and/or blend region and/or fence.

In some embodiments the cross-sectional shape of the fence is substantially the same as the cross-sectional shape of the tip of the main body. This may enhance the benefit provided by the invention as additional fence material (altering the cross-sectional shape) may alter the aerodynamic interaction between the main body and/or blend region and/or fence.

In some embodiments the fence is between 80 and 100° anhedral to the main body. The fence may also be between 85 and 95° anhedral and may be substantially perpendicular. Such embodiments may increase the aerodynamic effectiveness of the fence and reduce the maximum radial length of the blade for a given fence length.

In some embodiments the blade is an open rotor blade. As will be appreciated by the skilled man open rotor engines may be known by alternative names including un-ducted fan or prop-fan. Such engines are however characterised by highly swept and thin blades as well as operating at higher flight speeds (e.g. Mach 0.75) than standard propellers and turbo-props. Frequently open rotor engines also comprise two counter-rotating blade stages. The present invention may be particularly advantageous for use in open rotors where higher blade tip speeds may result in increased risk/strength of aerodynamic shocks.

In some embodiments the open rotor blade is arranged for use in the rear stage of a pair of counter-rotating stages. The reduced overall length of the blades in the rear stage may result in clearance or greater clearance between vortex flows from blade tips of the front stage. This may result in reduced vortex interaction with the rear stage blades, potentially resulting in reduced noise. This may be particularly important at take-off of an aircraft using the open rotor engine.

According to a second aspect of the invention there is provided an open rotor engine comprising at least one blade corresponding to the first aspect.

In some embodiments the open rotor engine has two counter-rotating blade stages with blades of the rear stage corresponding to the blades of the first aspect.

According to a third aspect of the invention there is provided a tidal turbine blade, the blade having optionally a main body, optionally a tip fence and optionally a blend region defining a curve between the main body and the fence, the fence optionally extending from the blend region anhedrally with respect to the main body. The invention may reduce or eliminate cavitation which would be more likely to occur at the blend region of prior art blades provided with dihedral fences.

The skilled person will appreciate that a feature described in relation to any one of the above aspects of the invention may be applied mutatis mutandis to any other aspect of the invention.

Embodiments of the present invention will now be described by way of example only, with reference to the accompanying figures, in which;
**Figure 1** is a sectional side view of an open-rotor gas turbine engine having contra-rotating blade stages;
**Figure 2** is a perspective view of a portion of a blade according to an embodiment of the invention;
**Figure 3** shows a series of aerofoil sections defining a blade main body, blend region and tip fence according to an embodiment of the invention;
**Figure 4** shows a blade with a blade line superimposed therein.
**Figure 5** is a front view of a blade according to an embodiment of the invention; and
**Figure 6** is a view of a blade in an axial-radial plane.

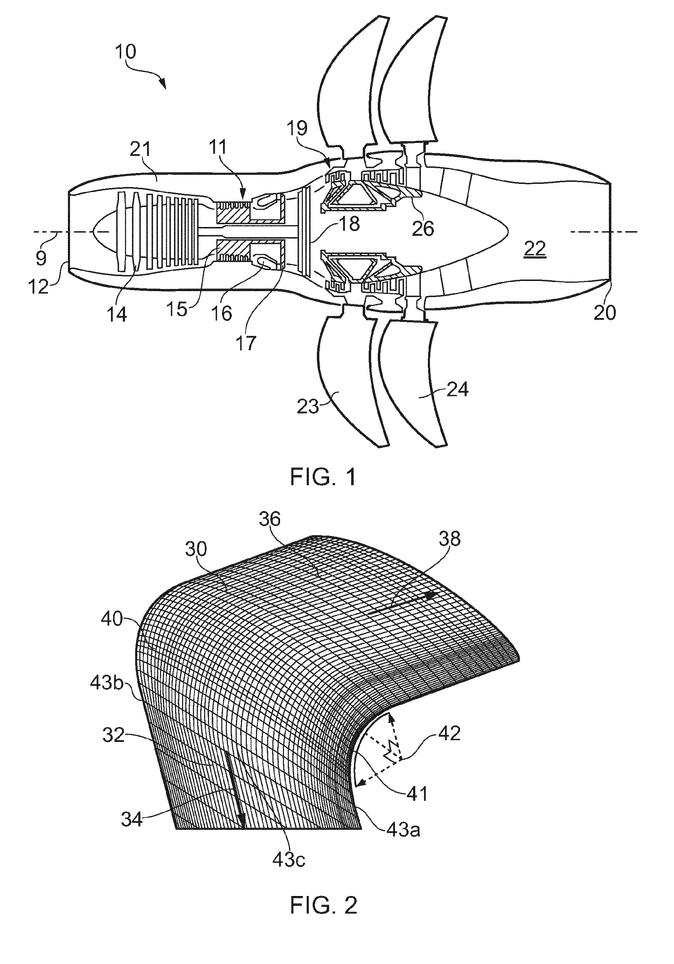

Referring to Figure 1, a twin-spooled, contra-rotating open-rotor gas turbine engine is generally indicated at 10 and has a principal rotational axis 9. The engine 10 comprises a core engine 11 having, in axial flow series, an air intake 12, an intermediate pressure compressor 14, a high-pressure compressor 15, combustion equipment 16, a high-pressure turbine 17, an intermediate pressure turbine 18, a free power (or low-pressure) turbine 19 and a core exhaust nozzle 20. A casing (in this case a nacelle 21) generally surrounds the core engine 11 and defines the intake 12 and nozzle 20 and a core exhaust duct 22. The engine 10 also comprises two contra-rotating blade stages, a front stage 23 and a rear stage 24, both attached to and driven by the free power turbine 19 via shaft 26.

The engine 10 works in a conventional manner so that air entering the intake 12 is accelerated and compressed by the intermediate pressure compressor 14 and directed into the high-pressure compressor 15 where further compression takes place. The compressed air exhausted from the high-pressure compressor 15 is directed into the combustion equipment 16 where it is mixed with fuel and the mixture combusted. The resultant hot combustion products then expand through, and thereby drive the high-pressure, intermediate pressure and free power turbines 17, 18, 19 before being exhausted through the nozzle 20 to provide propulsive thrust. The high-pressure, intermediate pressure and free power turbines 17, 18, 19 respectively drive the high and intermediate pressure compressors 15, 14 and the blade stages 23, 24 by suitable interconnecting shafts. The blade stages 23, 24 normally provide the majority of the propulsive thrust. In the embodiments herein described the blade stages 23, 24 rotate in opposite senses so that one rotates clockwise and the other anti-clockwise around the engine's rotational axis 9.

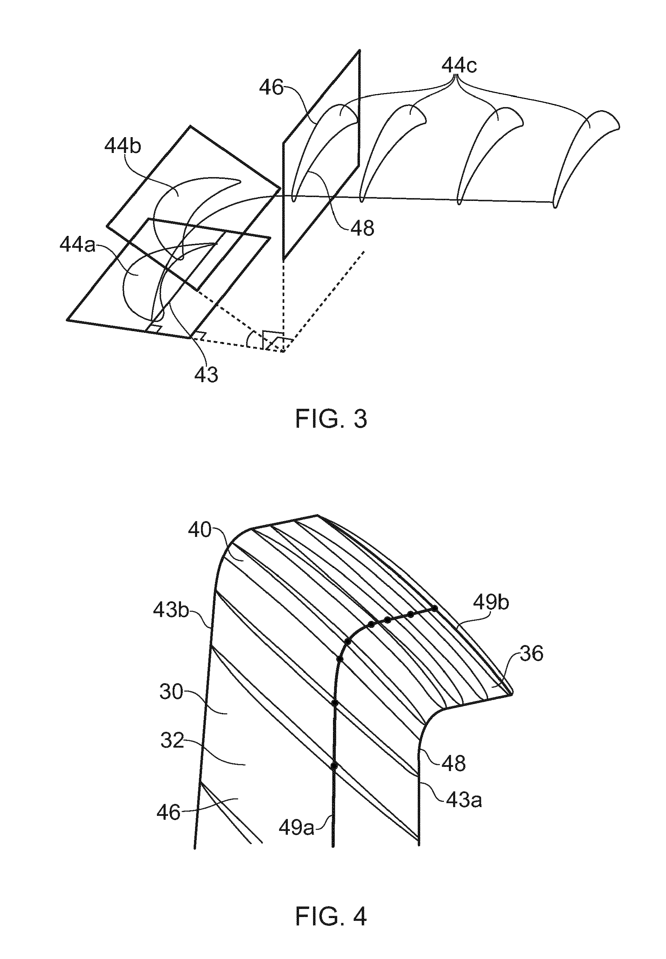

Referring now to Figure 2 a portion of a blade (in this case an open-rotor blade) is generally shown at 30. The blade 30 has a main body 32 (only some of which is shown) having a longitudinal direction 34. The blade 30 is also provided with a fence 36 having an anhedral direction 38. In this case the longitudinal direction of the main body 32 and the anhedral direction 38 of the fence 36 extend perpendicular to one another. Between and directly abutting the main body 32 and fence 36 is a blend region 40. The blend region 40 is curved, thus linking the main body 32 and fence 36. In this case the blend region 40 is a continuous curve with a consistent change in gradient. As will be appreciated however, in alternative embodiments the blend region 40 may comprise multiple discrete gradient changes, that together approximate and define a curve. Further the degree of gradient change may alter along the length of the blend region 40. The blend region 40 may be defined by its radius of curvature. In accordance with the invention the radius of curvature is below five inches and may be above one inch. The radius of curvature is measured to a concave surface 41 of the blend region 40 about an axis 42 parallel to a line 43 (see Figure 3) joining the leading 43a and trailing 43b edges of the main body 32 at its tip 43c.

Referring now to Figure 3, cross-sectional portions 44 of blade 30 are shown, illustrating the progression of the blade 30 from the main body 32 (section 44a), through the blend region 40 (section 44b) into the fence 36 (sections 44c). The cross-sectional shape of each section 44 (and each of the main body 32, blend region 40 and fence 36) is an aerofoil. The cross-sectional shape is consistent across all three. The aerofoil cross-sectional shape has a suction side 46 and a pressure side 48. As can be seen, the direction of the curve arising from the blend region 40 means that the pressure side of the main body 32 and the pressure side of the fence 36 form a concave angle (that is less than 180° and in this case 90°). Consequently the fence 36 is anhedral with respect to the main body 32.

Referring now to Figure 4, a portion of blade 30 is shown with a blade line 49a passing along the main body 32, the blend region 40 and the fence 36. In order to define the blade line 49a, mean chord lines are drawn for all sections that make up the blade 30. The mean chord lines join the leading 43a and trailing 43b edges and sit midway between the aerofoil suction 46 and pressure 48 surfaces. For clarity, only the mean chord line 49b for the fence tip section is shown in Figure 4. The blade line corresponds to a line drawn through points positioned at 40% of the distance along each chord line from the leading 43a to the trailing 43b edge.

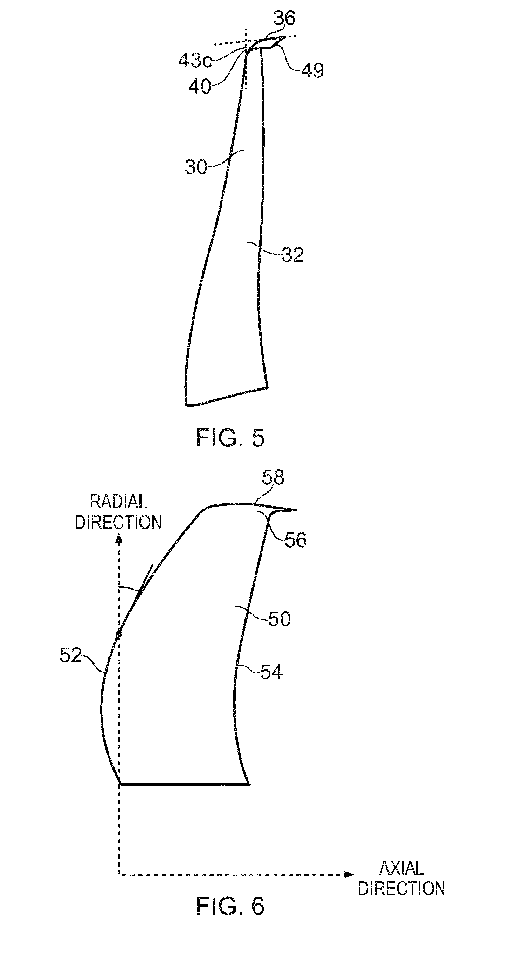

Referring now to Figure 5, blade 30 is shown including the whole of its main body 32, the blending region 40 and fence 36. As can be seen the length of the fence 36 along the blade line is less than 10% of the total length of the blade 30 along the blade line. Although the extent of the fence 36 in the circumferential direction is considerably greater than its extent in the radial direction, its circumferential extent is nonetheless relatively limited.

Figure 6 highlights an additional geometric feature that may be added to the blade 30. A blade 50 incorporating sweep is shown in an axial-radial plane. A swept blade may be defined as having an angle to the radial direction (the radial direction being defined as perpendicular to the axis of machine rotation when the blade is in use with that machine). As can be seen both the leading 52 and trailing 54 edge of the blade 50 are provided at an angle to the radial plane. Furthermore the degree of sweep alters along the length of both the leading 52 and trailing 54 edges. As can be seen the sweep continues through a blend region 56 of blade 50 and into and for the full extent of a fence 58 of blade 50.

Combining the various features mentioned above, a single blade may have a blend region intermediate a main body and tip fence, each having an aerofoil cross-sectional shape and the tip fence being 90° anhedral to the main body. The radius of curvature of the blend region may be between one and five inches and the fence itself may be relatively short. Additionally the main body may be provided with a sweep which extends through the blend region and into the fence.

Such a blade may be fitted to an open rotor gas turbine engine as shown in Figure 1, and may operate so as to be capable of powering an associated aircraft to typical speeds of approximately Mach 0.75, without the blades producing excessive aerodynamic shock loss caused by blade relative flow well in excess of Mach 1.

In use the anhedral fence means that the pressure between the blade main body and fence is higher relative to ambient than if the fence were not present. The higher pressure results in lower air velocity. A dihedral fence results in higher air velocity between the blade main body and fence than if the fence were not present. The maximum velocity on the convex side of the blend is relatively unaffected by the introduction of the fence. Therefore the anhedral fence reduces the maximum Mach number on the blade relative to that on a blade with an equivalent dihedral fence. The anhedral fence therefore allows the blend region to have a reduced radius of curvature than would otherwise be possible, without increasing the maximum shock strength, which would otherwise adversely affect efficiency and performance. In turn the reduced radius of curvature of the blend region means that the longitudinal extent of the blade may be reduced without adversely affecting the quantity of thrust produced by the blade. The shorter blade may have several advantages particularly in terms of saving weight and increasing design choice.

Although the invention has been generally discussed in the context of aircraft open rotor engines, the skilled man will appreciate that this is not intended to be limiting and alternative implementations (including in tidal turbines) are also possible. Further it will be understood that the invention is not limited to the embodiments above-described and various modifications and improvements can be made without departing from the various concepts described herein. Any of the features may be employed separately or in combination with any other features and the invention extends to and includes all combinations and subcombinations of one or more features described herein in any form of rotor blade.

## Claims

1. A blade at least part of which is arranged in use to rotate outside of a casing of a gas turbine engine, the blade having a main body, a tip fence and a blend region defining a curve between the main body and the fence, the blend region having a radius of curvature below five inches and the fence extending from the blend region anhedrally with respect to the main body.

2. A blade according to claim 1 where the radius of curvature of the blend region is greater than one inch.

3. A blade according to claim 1 or claim 2 where the maximum circumferential extent of the fence is greater than the maximum radial extent of the fence.

4. A blade according to any preceding claim where the length of the fence along a blade line is less than 10% of the total length of the blade along the blade line.

5. A blade according to any preceding claim where the main body is swept.

6. A blade according to claim 5 where the sweep of the main body continues into the blend region and at least a portion of the fence.

7. A blade according to any preceding claim where the main body has an aerofoil cross-section.

8. A blade according to claim 7 where the aerofoil cross-section continues into the blend region and at least a portion of the fence.

9. A blade according to any preceding claim where the cross-sectional shape of the blend region is substantially the same as the cross-sectional shape of the tip of the main body.

10. A blade according to any preceding claim where the cross-sectional shape of the fence is substantially the same as the cross-sectional shape of the tip of the main body.

11. A blade according to any preceding claim where the fence is between 80 and 100° anhedral to the main body.

12. A blade according to any preceding claim where the blade is an open rotor blade.

13. A blade according to claim 12 where the open rotor blade is arranged to be used in the rear stage of a pair of counter-rotating stages.

14. An open rotor engine comprising at least one blade corresponding to any of claims 1 to 13.

15. An open rotor engine according to claim 14 having two counter-rotating blade stages with blades of the rear stage corresponding to the blades of any of claims 1 to 13.
